# FASCICULE DE BREVET EUROPEEN

(11) **EP 1 897 210 B1**
(45) Date de publication et mention de la délivrance du brevet: **04.12.2013**
(21) Numéro de dépôt: 06778943.8
(22) Date de dépôt: 16.06.2006
(51) Int. Cl.: H02K 21/04, H02K 3/52, H02K 9/06, H02K 9/22

(54) **ROTOR A POLES SAILLANTS COMPORTANT DES FLASQUES DE MAINTIEN DES CHIGNONS DES BOBINAGES ET MACHINE ELECTRIQUE TOURNANTE COMPORTANT UN TEL ROTOR**
PROJEKTIONSPOLROTOR UND SPULENENDSTÜTZPLATTEN UND ELEKTRISCHE ROTATIONSMASCHINE DAMIT
PROJECTING POLE ROTOR COMPRISING COIL END SUPPORT PLATES AND ROTARY ELECTRIC MACHINE COMPRISING ONE SUCH ROTOR

(30) Priorité: 28.06.2005 FR 0506578
(43) Date de publication de la demande: 12.03.2008
(73) Titulaire: VALEO EQUIPEMENTS ELECTRIQUES MOTEUR, 94046 Créteil (FR)
(72) Inventeur: LEROY, Virginie, F-93360 Neuilly Plaisance (FR); TUNZINI, Marc, F-78000 Versailles (FR)
(74) Mandataire: Gamonal, Didier
(86) Numéro de dépôt international: PCT/FR2006/050565
(87) Numéro de publication internationale: WO 2007/003835

(56) Documents cités:
- DE-C- 596 337
- FR-A- 2 856 532
- US-A1- 2002 089 244
- US-A1- 2002 135 245
- US-A1- 2003 011 257

## Description

L'invention concerne un rotor à pôles saillants pour une machine électrique tournante et une machine électrique tournante comportant un tel rotor.

L'invention concerne plus particulièrement un rotor de machine électrique tournante, notamment un alternateur ou un alterno-démarreur pour véhicule automobile, comportant :
- un arbre de rotor qui est destiné à être monté rotatif autour de son axe ;
- un paquet de tôles qui est monté coaxialement sur l'arbre de rotor en étant délimité axialement par des faces radiales d'extrémités axiales externes et qui comporte au moins deux pôles saillants radialement ;
- un bobinage d'excitation qui est enroulé autour de chaque pôle, de manière que des portions d'extrémités axiales du bobinage, dites chignons, font saillie axialement par rapport à chaque face radiale d'extrémité axiale externe du paquet de tôle, la face radiale externe de chaque chignon étant décalée axialement vers l'extérieur par rapport à la face radiale d'extrémité axiale externe associée du paquet de tôles ;
- deux flasques de maintien du paquet de tôle qui sont agencés axialement de part et d'autre du paquet de tôles de manière que les faces radiales internes des flasques, orientées vers le paquet de tôles soient en appui contre les faces radiales d'extrémités axiales externes du paquet de tôles, des logements étant réalisés dans la face radiale interne de chaque flasque pour recevoir les chignons.

### Etat de la technique

On connaît déjà des rotors de ce type, notamment par les documents WO-A-02/054566 et FR 2 856 532 conformes au préambule de la revendication 1.

Dans ce type de rotor, la mise sous tension des bobinages provoque leur échauffement. Si les bobinages d'excitation sont trop échauffés, cela peut nuire à la sécurité et à l'efficacité de la machine.

Ce document propose de refroidir les bobinages en ménageant un évidement dans les flasques de maintien du paquet de tôle pour laisser les chignons en contact avec l'air.

Par ailleurs, un ventilateur est agencé sur la face radiale externe de chaque flasque de manière à provoquer un brassage d'air à l'intérieur de la machine lorsque le rotor est en rotation.

Cependant, les pâles du ventilateur sont éloignées des évidements empêchant ainsi l'air de circuler au contact des chignons. L'air stagnant contenu dans l'évidement entre le ventilateur et le chignon forme une couche isolante qui empêche la chaleur de se dissiper. Les bobinages ne sont donc pas refroidis de façon optimale.

Dans le document US 2002/0135245 on évacue la chaleur au niveau des bobinages d'un stator, dont le corps est associé à un manchon externe de refroidissement portant des canaux de refroidissement parcourus par un liquide de refroidissement. Les chignons sont encastrés chacun dans un bloc en matériau thermiquement conducteur relié à sa périphérie externe au manchon, qui ne peut pas être implanté entre la périphérie interne du stator et la périphérie externe du rotor. Cette solution ne permet pas de refroidir de manière optimale les bobinages d'un rotor.

### Objet de l'invention

Pour remédier à ce problème, l'invention propose donc un rotor du type décrit précédemment, caractérisé par la partie caractérisante de la revendication 1.

Selon d'autres caractéristiques de l'invention prises isolément ou en combinaison :
- le logement comporte un fond qui enveloppe complètement le chignon ;
- les logements opposés qui reçoivent les chignons d'un même bobinage comportent un fond qui enveloppe complètement le chignon ;
- l'un des flasques comporte un orifice de remplissage qui débouche dans le fond d'un logement de manière à permettre l'injection du vernis liquide autour des deux chignons du bobinage ;
- chaque logement est rempli de vernis de manière qu'il ne subsiste aucune bulle d'air dans le logement ;
- les flasques sont réalisés en matériau amagnétique conducteur de chaleur ;
- chaque flasque comporte des moyens de refroidissement qui sont aptes à évacuer la chaleur transmise au flasque par les chignons ;
- les moyens de refroidissement comportent un ventilateur comportant des pâles ;
- les pâles du ventilateur sont portées par une face radiale externe du flasque ;
- les pâles sont venues de matière avec le flasque ;
- les pâles sont réparties dissymétriquement autour de l'axe de rotation du rotor ;
- au moins un des flasques est réalisé en une unique pièce ;
- les logements consistent en des creusures ;
- au moins un des flasques est réalisé en au moins un premier tronçon interne qui comporte des évidements pour le passage des chignons et un deuxième tronçon externe qui comporte un fond pour former les logements avec-les évidements du premier tronçon ;
- les flasques sont liés axialement l'un à l'autre par des tirants d'orientation axiale ou des tiges d'orientation axiale fixées par rivetage;
- les tirants sont fixés par vissage par l'intermédiaire d'un trou de fixation taraudé qui est réalisé dans l'un des flasques ;
- l'un au moins des flasques comporte des trous d'équilibrage en rotation.

L'invention propose aussi une machine tournante équipée d'un tel rotor.

### Description sommaire des dessins

D'autres caractéristiques et avantages de l'invention apparaîtront au cours de la lecture de la description détaillée qui va suivre pour la compréhension de laquelle on se reportera aux dessins annexés parmi lesquels :
la figure 1 est une Vue en coupe axiale d'une machine électrique tournante, qui représente un rotor réalisé selon les enseignements de l'invention ;
- la figure 2 est une vue en section radiale selon le plan de coupe 2-2 de la figure 1 ;
- la figure 3 est une vue en perspective qui représente la face interne d'un premier flasque du rotor de la figure 1 ;
- la figure 4 est une vue en perspective selon un point de vue opposé à celui de la figure 3 qui représente la face externe du premier flasque ;
- la figure 5 est une vue similaire à celle de la figure 3 qui représente la face interne d'un deuxième flasque du rotor de la figure 1 ;
- la figure 6 est une vue similaire à celle de la figure 4 qui représente la face externe du deuxième flasque.

### Description d'exemples de réalisation de l'invention

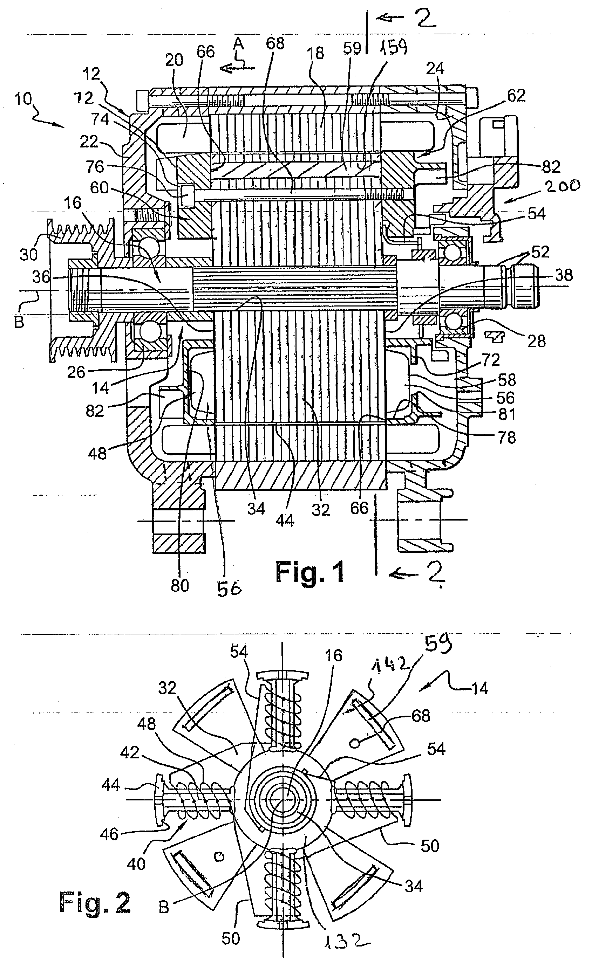

Dans la suite de la description, on adoptera à titre non limitatif une orientation axiale dirigée d'arrière en avant indiquée par la flèche "A" de la figure 1, et des orientations radiales perpendiculaires à l'orientation axiale.

Dans la suite de la description, des faces s'étendant dans un plan perpendiculaires à l'orientation axiale "A" seront qualifiées de faces radiales.

Par la suite, des éléments similaires, analogues ou identiques seront désignés par des mêmes numéros de référence.

On a représenté à la figure 1 une machine tournante 10. La machine tournante 10 est par exemple un alternateur ou un alterno-démarreur. Cette machine 10 est de préférence destinée à être mise en oeuvre dans un véhicule automobile.

On rappelle qu'un alterno-démarreur est une machine électrique tournante apte à travailler de manière réversible, d'une part, comme générateur électrique en fonction alternateur et, d'autre part, comme moteur électrique notamment pour démarrer le moteur thermique du véhicule automobile. Un tel alterno-démarreur est décrit par exemple dans le document WO-A-01/69762 auquel on se reportera pour plus de précisions.

Cette machine 10 comporte essentiellement un carter 12 et, à l'intérieur de celui-ci, un rotor 14 solidaire en rotation d'un arbre central de rotor 16 et un stator 18 annulaire qui entoure le rotor 14 de manière coaxiale à l'arbre 16 d'axe "B" constituant également l'axe du rotor 14.

Le stator 18 comporte un corps en forme d'un paquet de tôles doté d'encoches, par exemple du type semi-fermé, pour le montage d'un bobinage de stator 20 comportant plusieurs enroulements.

Ce bobinage de stator 20 comporte par exemple un jeu d'enroulements triphasé en étoile ou- en triangle, dont les sorties sont reliées à un pont redresseur (non représenté) comportant des éléments redresseurs tels que des diodes ou des transistors du type MOSFET, notamment lorsque la machine 10 est du type réversible et consiste en un alterno-démarreur comme décrit par exemple dans le document FR-A-2.745.445 (US-A-6.002.219).

Les enroulements du bobinage de stator 20 sont obtenus à l'aide d'un fil continu, électriquement conducteur, revêtu d'une couche isolante et monté dans les encoches concernées du corps du stator 18.

Selon une variante non représentée, pour un meilleur remplissage des encoches du corps du stator 18, les enroulements 20 sont réalisés à l'aide de conducteurs en forme de barres, tel que des épingles, reliées entre elles par exemple par soudage.

Selon une autre variante non représentée, pour réduire le taux d'ondulation et les bruits magnétiques, le bobinage de stator 20 comporte deux jeux d'enroulements triphasés pour former un dispositif d'enroulements composites de stator 18, les enroulements étant décalés de trente degrés électriques comme décrit par exemple dans les documents US-A1-2002/0175589, EP-0.454.039 et FR-A-2.784.248. Dans ce cas il est prévu deux ponts redresseurs et toutes les combinaisons d'enroulements triphasés en étoile et/ou en triangle sont possibles.

D'une manière générale l'alternateur est du type polyphasé et le ou les ponts redresseurs permettent notamment de redresser le courant alternatif produit dans les enroulements du stator 18 en un courant continu notamment pour charger la batterie (non représentée) du véhicule automobile et alimenter les charges et les consommateurs électriques du réseau de bord du véhicule automobile.

Comme illustré à la figure 1, l'arbre 16 du rotor 14 est monté à rotation autour de son axe "B" d'orientation axiale dans le stator 18 de la machine 10.

Le carter 12 est en au moins -deux- parties, à savoir un palier avant 22 et un palier arrière 24. Les paliers 22, 24 sont de forme creuse et portent chacun centralement un roulement à billes respectivement 26 et 28 pour le montage à rotation de l'arbre 16 du rotor 14.

Ici le carter 12 comporte une partie intermédiaire (non référencée) portant intérieurement le corps du stator 18. Cette partie intermédiaire est intercalée axialement entre les paliers 22, 24 dotés chacun d'une pluralité d'ouvertures (non référencées) pour ventilation interne de la machine grâce à au moins un ventilateur solidaire d'une des extrémités axiale du rotor. Dans le mode de réalisation de la figure 1 ce ventilateur comporte des pâles 82 solidaires d'un flasque 60, 62 de manière décrite ci-dessous.

L'arbre 16 du rotor 14 porte à son extrémité avant une poulie 30 qui est agencée à l'extérieur du carter 12. La poulie 30 appartient à un dispositif de transmission de mouvements par l'intermédiaire d'au moins une courroie (non représentée) entre l'alternateur et le moteur thermique du véhicule automobile.

Un paquet de tôles 32 est monté coaxialement sur l'arbre 16 de rotor 14 dans le carter 12, à l'intérieur du stator 18. Le paquet de tôles 32 est plus précisément monté solidaire en rotation de l'arbre 16. A cet effet, le paquet de tôles 32 comporte un orifice axial central 34 qui est emmanché à force sur un tronçon moleté de l'arbre 16.

Le paquet de tôles 32 est formé d'un empilement axial de tôles qui s'étendent dans un plan radial perpendiculaire à l'axe "B" de l'arbre de rotor 16.

Le paquet de tôles 32 forme le corps du rotor 14 et est en matière ferromagnétique.

Ce paquet de tôles 32 comporte ici, comme mieux visible à la figure 2, une âme centrale cylindrique 132 et une alternance circonférentielle de bras 42, 142 saillants radialement à partir de l'âme 132. Ces bras sont dans un mode de réalisation d'un seul tenant avec l'âme 132. En variante l'une au moins des séries 42, 142 de bras est rapportée sur l'âme 132, par exemple par une liaison du type tenons-mortaises comme décrit dans le document FR 2 856 532 précité.

Dans la suite de la description, des faces radiales orientées vers le milieu du paquet de tôles 32 seront qualifiées de faces internes tandis que les faces radiales orientées dans un sens opposé seront qualifiées de faces externes.

Ainsi, le paquet de tôles 32 est délimité axialement par une première face radiale externe d'extrémité avant 36 et par une deuxième face radiale externe opposée d'extrémité arrière 38. Les faces 36, 38 constituent donc les faces radiales d'extrémités axiales externes du paquet de tôles 32.

Dans un plan radial, les tôles du paquet de tôles 32 ont toutes un contour identique. Le contour des tôles 32 est découpé de forme globalement circulaire et comportant des pôles 40 saillants, qui sont répartis régulièrement selon une direction radiale et saillants de l'arbre 16 vers la périphérie externe, comme illustré à la figure 2. Le paquet de tôles 32 comporte au moins deux pôles 40 et dans l'exemple représenté aux figures, il comporte quatre pôles 40.

Chaque pôle 40 est constitué d'un bras 42 qui, à partir de l'âme 132, s'étend radialement vers la périphérie extérieure en direction du stator 18. L'extrémité libre 44 du pôle 40 se termine par un retour saillant 46 circonférentiellement de part et d'autre du bras 42. Un entrefer annulaire existe entre l'extrémité libre 44 des pôles 40 et la périphérie intérieure du corps du stator 18.

La fonction du retour saillant 46 de chaque pôle 40 est de retenir dans la direction radiale un bobinage d'excitation 48 électriquement conducteur, qui est enroulé autour du bras radial 42 de chaque pôle 40, à l'encontre de la force centrifuge subie par le bobinage d'excitation 48 lors de la rotation du rotor 14.

Les bobinages d'excitation 48 de chaque pôle 40 sont reliés électriquement entre eux par des fils de liaison 50, par exemple en série.

Les bobinages d'excitation 48 sont alimentés électriquement par un collecteur, qui comporte des bagues collectrices 52, qui sont agencées autour d'une extrémité arrière de l'arbre 16. Ce collecteur est par exemple réalisé par surmoulage de matière électriquement isolante sur des éléments électriquement conducteurs (non visibles) reliant les bagues 52 à un anneau (non référencé) relié électriquement par des liaisons filaires 54 aux extrémités du ou des bobinages d'excitation 48 du rotor 14.

Les bagues collectrices 52 sont alimentées électriquement par l'intermédiaire de balais (non représentés) qui appartiennent à un porte-balais et qui sont disposés de façon à frotter sur les bagues collectrices 52. Le porte-balais est généralement agencé dans le carter 12 et il est relié électriquement à un régulateur de tension.

Chaque bobinage d'excitation 48 est enroulé autour du bras 42 d'orientation radiale de chaque pôle 40 de manière que des portions d'extrémités axiales 56 du bobinage d'excitation 48 font saillie axialement par rapport à chaque face radiales d'extrémité axiale externe 36, 38 du paquet de tôles 32, comme représenté à la figure 1. Ces portions en saillie seront par la suite appelées "chignons" 56. Plus particulièrement, la face radiale externe 58 de chaque chignon 56 est décalée axialement vers l'extérieur par rapport à la face radiale d'extrémité axiale externe 36, 38 associée du paquet de tôles 32.

Chaque pôle 40 comporte ainsi un bobinage d'excitation 48 qui comporte lui-même deux chignons 56 opposés.

Le rotor 14 comporte ici des aimants 59 qui sont au nombre de quatre. Les aimants 59 s'étendent ici perpendiculairement à un rayon c'est-à-dire de manière orthoradiale. Les aimants 59 s'étendent axialement au voisinage de la périphérie externe du rotor 14. Ainsi les aimants 59 sont agencés régulièrement autour de l'arbre 16 en alternance avec les pôles 40. Pour ce faire le paquet de tôles 32 du rotor 14 comporte des logements axiaux 159 pour le montage des aimants.

Les logements 159 sont réalisés chacun dans un bras radial 142 précité, qui s'étend en saillie radiale à partir de l'âme 132.

A la figure 2 il est prévu une alternance circonférentielle de quatre bras 42 et de quatre bras 142. Bien entendu cela dépend des applications. D'une manière générale un faible jeu, appelé entrefer, existe entre la périphérie externe des bras 42, 142 et la périphérie interne du corps du stator 18.

Chaque série de bras 42, 142 comporte au moins deux bras diamétralement opposés. Le nombre de bras de chaque série peut être supérieur à quatre. On peut concevoir une disposition sans aimants 59 et donc sans bras 142. Un même bras 142 peut comporter deux aimants, par exemple un aimant en terre rare et un aimant en ferrite. Un aimant peut s'étendre radialement. Toutes les combinaisons sont possibles.

Par simplicité, à titre non limitatif, on supposera dans la suite qu'il est prévu quatre bras diamétralement opposés pour chaque série de bras 42, 142, et donc quatre pôles 40, quatre bobinages 48 et au moins quatre aimants 59. Les bras 42, 142 sont répartis ici circonférentiellement de manière régulière.

Un premier flasque avant 60 et un deuxième flasque arrière 62 sont montés coaxialement à l'arbre 16 de manière à enserrer axialement le paquet de tôles 32 pour maintenir les tôles 32 empilées en paquet et les aimants 59. Plus précisément les flasques 60, 62 ferment axialement les logements 159 des aimants 59.

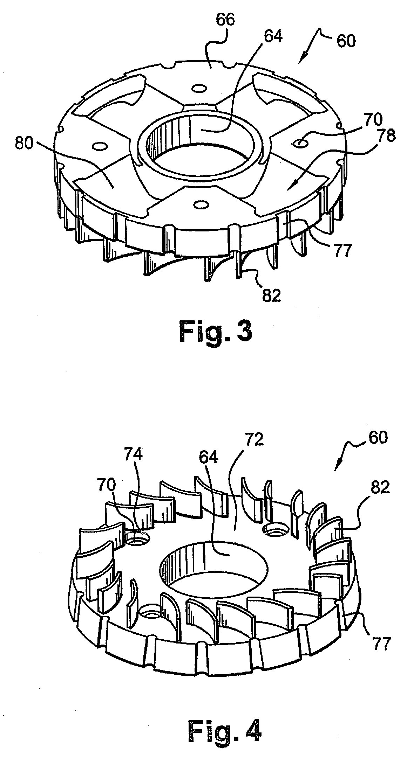

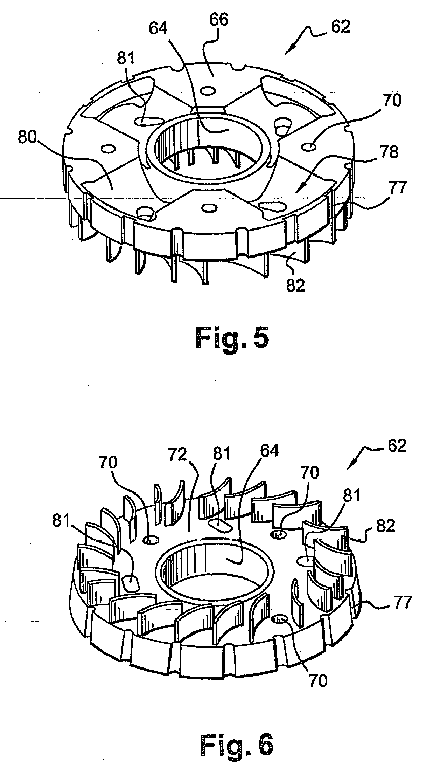

Comme représenté aux figures 3, 4 et 5, chaque flasque 60, 62 a globalement la forme d'un disque s'étendant dans un plan radial perpendiculaire à l'axe "B" de l'arbre 16. Chaque flasque 60, 62 comporte comportant un orifice central 64 pour le montage coaxial sur l'arbre 16.

Pour maintenir axialement les aimants 59 et les tôles formant le paquet de tôles 32, les flasques 60, 62 sont agencés axialement de part et d'autre du paquet de tôles 32 de manière que les faces radiales internes 66 des flasques 60, 62, orientées vers le paquet de tôles 32, soient en appui contre les faces radiales d'extrémités axiales externes 36, 38 du paquet de tôles 32, comme illustré à la figure 1.

Les flasques 60, 62 sont fixés l'un à l'autre par des tirants 68 d'orientation axiale, qui sont ici au moins au nombre de deux. A cet effet chaque flasque 60, 62 comporte quatre trous 70 destinés à permettre le passage de chaque tirant 68. Les bras 142 du paquet de tôles comportent des trous (non référencés) de manière que les tirants 68 puissent traverser axialement le paquet de tôles 32 depuis le flasque avant 60 jusqu'au flasque arrière 62, ici radialement en dessous des aimants 59 comme visible à la figure 1. Ici deux trous diamétralement opposés ne sont pas traversés par des tirants, au nombre de deux pour réduction du nombre de pièces.
La face radiale externe 72 du flasque avant 60 comporte ici des lamages 74 pour loger la tête 76 de chaque tirant 68.

Les flasques 60, 62 sont en matière conductrice de chaleur. Les flasques sont par exemple métalliques.

Dans un mode de réalisation les flasques sont réalisés dans un matériau amagnétique tel que de l'aluminium, qui est une matière moulable et bonne conductrice de la chaleur.

Avantageusement, le bord périphérique externe des flasques 60, 62 en vis-à-vis du stator 18 comporte des rainures axiales 77 qui sont débouchantes dans les faces radiales interne 66 et externe 72 des flasques 60, 62. Ces rainures 77 permettent de renouveler l'air qui est compris radialement entre le stator 18 et le rotor 14.

Chaque flasque 60, 62 comporte aussi des logements 78 qui sont réalisés dans leur face radiale interne 66. Ces logements 78 sont destinés à recevoir les chignons saillants 56. Ici quatre logements 78 sont prévus. Les logements 78 sont répartis régulièrement circonférentiellement et alternent donc circonférentiellement avec des portions planes, qui appartiennent à la face interne 66 et permettent de maintenir les aimants 59.

Ici la machine électrique tournante est un alterno-démarreur et le flasque arrière 62 est configuré pour porter un porte-cible qui est destiné à permettre à des capteurs associés de détecter la position angulaire du rotor 14. Les capteurs sont portés par un porte-capteurs dont la position est réglable circonférentiellement. La lecture de la cible est ici radiale.

Le porte-cible avec sa cible et les capteurs solidaires d'un porte capteur appartiennent à des moyens 200 de suivi de la rotation du rotor comme décrit dans le document précité WO01/69762 auquel on se reportera pour plus de précisions.

Ainsi le flasque 62 comporte à sa périphérie interne une bague d'orientation axiale (non référencée) portant à son extrémité libre le porte-cible. La bague est venue ici de moulage avec le flasque 62, ici en aluminium.

Bien entendu en variante le flasque 62 est dépourvu de bague et la machine électrique tournante est un alternateur.

Ce flasque comporte également des canaux pour les logements des fils 50 et des liaisons filaires 54 comme visible en partie à la figure 1.

Selon les enseignements de l'invention, au moins un des logements 78 d'au moins un flasque 60, 62 comporte une surface de contact avec la face radiale externe 58 du chignon 56 associé, et les flasques 60, 62 sont réalisés dans un matériau conducteur de chaleur.

Dans le mode de réalisation représenté aux figures, chaque logement 78 est fermé par un fond radial externe 80 qui obture totalement l'extrémité axiale externe logement 78 de manière que le chignon 56 soit complètement enveloppé par le logement 78. Le fond 80 obture totalement le logement 78 de sorte que le logement 78 ne débouche pas dans la face radiale externe 72 des flasques 60, 62. Ainsi, les logements 78 ne débouche que dans la face radiale Interne 66 de chaque flasque 60, 62.

Le fond 80 forme ainsi une surface de contact avec la face radiale externe 58 du chignon 56. Ce fond épouse ici la forme du chignon 56. Ainsi, lorsque les chignons 56 sont échauffés, leur chaleur est transmise aux flasques notamment par conduction.

Selon une variante non représentée de l'invention, au moins un fond 80 n'obture pas complètement le logement 78, ainsi le logement 78 débouche partiellement dans la face radiale 72 du flasque 60, 62.

Comme représentés à la figure 1, les logements 78 des deux flasques 60, 62 comportent ici un fond 80. Ainsi, les deux chignons 56 d'un même bobinage d'excitation 48 sont adjacents aux fonds 80 de deux logements 78 opposés associés de chaque flasque 60, 62, qui permettent ainsi de bien évacuer la chaleur. Les chignons 56 peuvent être dans un mode de réalisation en contact direct avec les fonds 80. Ici les chignons 56 sont en contact avec les fonds 80 via une substance conductrice de chaleur de manière décrite ci-après.

Les flasques 60, 62, ici en aluminium, sont avantageusement réalisés en une unique pièce, par exemple par moulage. Les logements 78 consistent par exemple en des creusures.

Pour éviter que le bobinage d'excitation 48 ne soit abîmé et pour éviter les courts-circuits dans le bobinage d'excitation 48, le chignon 56 est en contact avec le fond 80 du logement 78 par l'intermédiaire d'une substance (non représentée) conductrice de chaleur et non conductrice d'électricité, qui protège les fils du bobinage d'excitation 48. La substance est ici, selon une caractéristique, un vernis d'imprégnation conducteur de chaleur et isolant électrique. Ce verni durcit par polymérisation.

Avantageusement, l'un des flasques 60, 62, ici le flasque arrière 62, comporte des orifices de remplissage 81 qui débouchent chacun dans le fond 80 d'un logement 78 associé. Ces orifices de remplissage 81 sont destinés à permettre l'imprégnation du vernis liquide autour du bobinage d'excitation 48 associé audit logement 78, et plus particulièrement autour des deux chignons 56 du bobinage d'excitation 48. L'opération d'imprégnation sera expliquée par la suite.

Chaque flasque 60, 62 comporte aussi des moyens de refroidissement qui sont aptes à évacuer la chaleur des chignons 56 qui a été transmise par conduction aux flasques 60, 62 par l'intermédiaire du fond 80 des logements 78.

Dans l'exemple représenté aux figures, la face radiale externe 72 de chaque flasque 60, 62 comporte des pâles 82 formant un ventilateur. Chaque pâle 82 s'étend axialement vers l'extérieur depuis la face radiale externe 72 du flasque associé 60, 62.

Avantageusement, les pâles 82 sont réalisées venues de matière avec le flasque 60, 62 associé.

Le fait que la face radiale externe 72 des flasques 60, 62 ne comporte pas d'évidement débouchant dans les logements 78, l'agencement des pâles 82 est avantageusement indépendant de l'agencement des logements 78.

De préférence, les pâles 82 sont agencées à la périphérie de la face radiale externe 72 du flasque 60, 62 de façon dissymétrique par rapport à l'axe "B" de l'arbre 16 de manière à produire des turbulences dans l'air environnant lorsque le rotor 14 tourne autour de son axe "B".

Lorsque le rotor 14 tourne, les pâles 82 permettent ainsi d'évacuer la chaleur emmagasinée notamment dans les flasques 60, 62 et le rotor 14 par circulation d'air à l'intérieur de la machine à la faveur des ouvertures que présentent les paliers 22, 24. Les flasques 60, 62 constituent donc des ventilateurs internes. En variantes seul le flasque 62 présente des pâles.

Selon une variante non représentée de l'invention, les flasques 60, 62 comportent d'autres moyens de refroidissement tels qu'un caloduc.

L'arbre 16 peut être un arbre conformé pour constituer un caloduc.

Selon un autre aspect de l'invention les trous de fixation 70 du flasque arrière 62, qui ne comporte pas les lamages 74, sont taraudés. Les tirants 68 comportent une extrémité filetée qui est vissée dans les trous taraudés 70 du flasque arrière 62 lors du montage du rotor 14.

En variante l'extrémité filetée du tirant est autotaraudeuse en sorte que le trou 70 associé du flasque 62 est lisse.

Les trous 70 du flasque 62 sont donc des trous de fixation.

En variante l'extrémité du tirant est lisse et traverse le trou 70 associé du flasque 62, l'éxtrémité libre du tirant étant écrisée au contact de la face externe du flasque 62 pour une fixation par rivetage.

En variante le tirant est remplacé par une tige traversant les trous 70 des flasques 60, 62 et du paquet de tôles 32, les extrémités axiales de la tige étant écrasées au contact des faces externes des flasques 60, 62 pour une fixation par rivetage.

Selon une variante non représentée de l'invention, au moins un flasque 60, 62 est réalisé en un premier tronçon interne et en un deuxième tronçon externe. Le premier tronçon interne est un disque qui comporte des évidements pour loger les chignons. La face radiale interne du premier tronçon interne est appuyée axialement contre la face radiale externe en vis-à-vis du paquet de tôles 32. Le deuxième tronçon externe est un disque dont la face radiale interne porte les fonds 80 des logements 78. Le deuxième tronçon externe est agencé de manière que sa face radiale interne soit en appui contre la face radiale externe du premier tronçon. La face radiale externe du deuxième tronçon externe comporte aussi éventuellement les pâles 82 formant ventilateur.

On décrit maintenant le montage du rotor 14.

Le paquet de tôles 32 et les bobinages d'excitation associés 48 sont montés sur l'arbre de rotor 16, ici par emmanchement à force. Puis les flasques 60, 62 sont agencés axialement de part et d'autre du paquet de tôles 32 de manière que les chignons 56 soient reçus dans les logements 78.

La tige filetée des tirants 68 est ensuite introduite axialement dans les trous de fixation 70 du flasque avant 60. Les tirants 68 sont ensuite vissés dans les trous de fixation taraudés 70 du flasque arrière 62 jusqu'à ce que la tête 78 de chaque tirant 68 soit en appui au fond du lamage 74 associé du flasque avant 60. Ainsi les tirants 68 permettent d'enserrer axialement le paquet de tôle 32 et les aimants 59 entre les deux flasques 60, 62.

Ensuite, lors d'une opération d'imprégnation, du vernis d'imprégnation liquide est introduit à l'intérieur des logement 78 du flasque arrière 62 par l'intermédiaire des orifices de remplissage 81.

Le vernis liquide s'écoule, plus ou moins vite en fonction de sa viscosité, axialement autour du bobinage d'excitation 48 de façon à atteindre le logement 78 opposé du flasque avant 60. Cette opération dure jusqu'à ce que les logements 78 des deux flasques 60, 62, et notamment l'espace compris entre la face radiale externe 58 du chignon 56 et le fond 80, soient remplis de vernis.

Le vernis liquide est ensuite durci par polymérisation.

Pour cette opération, l'axe "B" du rotor 14 est de préférence orienté de façon à faciliter l'écoulement du vernis par gravité, par exemple verticalement.

Avantageusement, lors l'opération d'imprégnation du vernis, les logements 78 sont vidés de leur air. L'opération d'imprégnation étant ainsi réalisée sous vide, chaque logement est rempli de vernis de manière qu'il ne subsiste aucune bulle d'air ou de tout autre gaz dans le logement 78. Ainsi, la transmission de la chaleur par conduction entre le chignon 56 et le flasque 60, 62 associé est optimale.

Puis une opération d'équilibrage des flasques est réalisée.

Cette opération consiste par exemple dans le perçage de trous ou d'évidements dans la périphérie de la face radiale externe 72 chaque flasque 60, 62 de manière que le rotor 14 ne vibre pas lorsqu'il est entraîné en rotation.

On appréciera que l'opération d'imprégnation permet une bonne tenue des bobinages 48 à l'encontre de la force centrifuge et une bonne isolation électrique des bobinages par rapport au paquet de tôles 32.

Lors du fonctionnement d'un tel rotor 14, les bobinages d'excitation 48 sont échauffés. La chaleur des bobinages d'excitation 48 est transmise par conduction aux flasques 60, 62 par l'intermédiaire des chignons 56, du vernis et du fond 80 des logements 78.

Les flasques 60, 62 tournent avec l'arbre 16 du rotor 14. Les pâles 82 brassent ainsi de l'air. Les pâles 82 dissipent ainsi dans l'air la chaleur accumulée dans le flasque 60, 62. La chaleur est donc évacuée de manière efficace dans l'air environnant par l'intermédiaire des pâles 82. L'air environnant est renouvelé grâce au brassage et aux turbulences induits par les pâles 82. Les pâles 82 sont ainsi maintenues à une température sensiblement plus basse que la température d'échauffement des bobinages d'excitation 48.

Le fait que les pâles 82 soient réalisée venues de matière avec le flasque 60, 62 associé assure une meilleure évacuation de la chaleur par conduction du flasque 60, 62 vers les pâles 82.

Le débit d'évacuation de la chaleur est proportionnel à la surface de contact entre les chignons 56 et les flasques 60, 62. Ainsi, le fait que le fond 80 des logements 78 recouvre entièrement le chignon 56 concerné permet d'évacuer une grande quantité de chaleur. A la figure 1 les fonds enveloppent entièrement les chignons 56 abstraction faite des orifices 81, bouchés par la suite.

Selon une variante non représentée de l'invention, le fond 80 est conformé de manière à augmenter l'aire de la surface de contact entre le fond 80 et le chignon 56, par exemple avec des nervures axiales.

Bien entendu la présente invention n'est pas limitée aux exemples de réalisation décrits.

Ainsi il est possible de prévoir quatre tirants à savoir un trou 70 par tirant. En variante il est prévu deux tirants diamétralement opposés et deux caloducs diamétralement opposés, chaque caloduc comportant une tige engagée dans au moins un trou 70 d'un des flasques 60, 62 et au moins dans un tronçon des trous du paquet de tôles 32 et débouchant à l'extérieur du flasque 60 ou 62 concerné. Ces caloducs peuvent traverser complètement les flasques 60, 62 et le paquet de tôles et être configurés à l'extérieur des flasques pour former des pâles de ventilateur. De tels caloducs sont décrits par exemple dans les figures 11A et 11 B du document FR 2 855 673 auquel on se reportera. Les dispositions des figures 12, 13 et 24 de ce document sont également applicables.

Le nombre de pôles 40 dépend de manière précitée des applications.

En variante le flasque ventilateur 60, 62 est obtenu par moulage, ou forgeage ou par injection de matière plastique ou de métal.

On appréciera que grâce à l'invention les chignons 56 sont bien refroidis par les flasques et que l'on a une plus grande liberté dans la conception dans la forme des pâles, dont le nombre peut être augmenté. On peut augmenter le débit d'air.

Le refroidissement du rotor est amélioré.

En outre l'opération d'équilibrage est facilitée grâce aux flasques permettant de réduire également le nombre d'organes de fixation.

## Revendications

1. Rotor (14) de machine électrique tournante (10), notamment alternateur ou alterno-démarreur pour véhicule automobile, comportant :
- un arbre de rotor (16) qui est destiné à être monté rotatif autour de son axe (B) ;
- un paquet de tôles (32), qui est monté coaxialement sur l'arbre de rotor (16) en étant délimité axialement par des faces radiales d'extrémités axiales externes (36, 38) et qui comporte deux au moins deux pôles (40) saillants radialement ;
- un bobinage d'excitation (48) qui est enroulé autour de chaque pôle (40), de manière que des portions (56) d'extrémités axiales du bobinage (48), dites chignons, font saillie axialement par rapport à chaque face radiale d'extrémité axiale externe (36, 38) du paquet de tôle (32), la face radiale externe (58) de chaque chignon (56) étant décalée axialement vers l'extérieur par rapport à la face radiale d'extrémité axiale externe (36, 38) associée du paquet de tôles (32) ;
- deux flasques (60, 62) de maintien du paquet de tôle (32) en matériau conducteur de chaleur, qui sont agencés axialement de part et d'autre du paquet de tôles (32) de manière que les faces radiales internes (66) des flasques (60, 62), orientées vers le paquet de tôle (32), soient en appui contre les faces radiales d'extrémités axiales externes (36, 38) du paquet de tôles (32), des logements (78) étant réalisés dans la face radiale interne (66) de chaque flasque (60, 62) pour recevoir les chignons (56) ;
**caractérisé en ce qu'**au moins un des logements (78) comporte une surface de contact avec la face radiale externe (58) du chignon (56) associé par l'intermédiaire d'un substance conductrice de chaleur et électriquement isolante sous la forme d'un vernis d'imprégnation et **en ce que** le logement (78) comporte un fond (80) qui enveloppe complètement le chignon (56).

2. Rotor (14) selon la revendication précédente, **caractérisé en ce que** le logement (78) opposé qui reçoit le chignon (56) d'un même bobinage (48) comporte un fond (80) qui enveloppe complètement le chignon (56).

3. Rotor (14) selon la revendication précédente, **caractérisé en ce que** l'un des flasque (60, 62) comporte un orifice de remplissage (81) qui débouche dans le fond (80) d'un logement (78) de manière à permettre l'injection du vernis liquide autour des deux chignons (56) du bobinage (48).

4. Rotor (14) selon la revendication précédente, **caractérisé en ce que** chaque logement (78) est rempli de vernis de manière qu'il ne subsiste aucune bulle d'air dans le logement (78).

5. Rotor selon l'une quelconque des revendications précédentes, **caractérisé en ce que** chaque flasque (60, 62) comporte plusieurs logements (78) comportant un fond (80) enveloppant complètement un chignon (56) et **en ce que** les logements sont répartis régulièrement circonférentiellement et alternent circonférentiellement

6. Rotor (14) selon l'une quelconque des revendications précédentes, **caractérisé en ce que** les flasques (60, 62) sont réalisé en matériau amagnétique conducteur de chaleur, tel que de l'aluminium.

7. Rotor (14) selon l'une quelconque des revendications précédentes, **caractérisé en ce que** chaque flasque (60, 62) comporte des moyens de refroidissement (82) qui sont aptes à évacuer la chaleur transmise au flasque (60, 62) par les chignons (56).

8. Rotor (14) selon la revendication précédente, **caractérisé en ce que** les moyens de refroidissement comportent un ventilateur comportant des pâles (82).

9. Rotor (14) selon la revendication précédente, **caractérisé en ce que** les pâles (82) du ventilateur sont portées par une face radiale externe (72) du flasque (60, 62).

10. Rotor (14) selon la revendication précédente, **caractérisé en ce que** les pâles (82) sont venues de matière avec le flasque (60, 62).

11. Rotor (14) selon la revendication précédente, **caractérisé en ce que** les pâles (82) sont réparties dissymétriquement autour de l'axe de rotation (B) du rotor (14).

12. Rotor (14) selon l'une quelconque des revendications précédentes, **caractérisé en ce qu'**au moins un des flasques (60, 62) est réalisé en une unique pièce en matière amagnétique, telle que de l'aluminium.

13. Rotor (14) selon la revendication précédente, **caractérisé en ce que** les logements (78) consistent en des creusures.

14. Rotor (14) selon l'une quelconque des revendications 1 à 13, **caractérisé en ce qu'**au moins un des flasques (60, 62) est réalisé en au moins un premier tronçon interne qui comporte des évidements pour le passage des chignons (56) et un deuxième tronçon externe qui comporte un fond (80) pour former les logements (78) avec les évidements du premier tronçon.

15. Rotor (14) selon l'une quelconque des revendications précédentes, **caractérisé en ce que** les flasques (60, 62) sont liés axialement l'un à l'autre par des tirants (68) d'orientation axiale.

16. Rotor (14) selon la revendication précédente, **caractérisé en ce que** les tirants (68) sont fixés par vissage par l'intermédiaire d'un trou de fixation taraudé (70) qui est réalisé dans l'un des flasques (62).

17. Rotor (14) selon l'une quelconque des revendications précédentes, **caractérisé en ce que** l'un au moins des flasques (60, 62) comporte des trous d'équilibrage en rotation.

18. Machine électrique tournante (10) comportant un stator (18) entourant un rotor (14) réalisé selon l'une quelconque des revendications précédentes.

## Patentansprüche

1. Rotor (14) einer elektrischen Drehmaschine (10), insbesondere eines Wechselstromgenerators oder Anlassergenerators für ein Kraftfahrzeug, welcher aufweist:
- eine Rotorwelle (16), welche dazu bestimmt ist, um ihre Achse (B) drehbar gelagert zu werden;
- ein Blechpaket (32), welches koaxial auf der Rotorwelle (16) angebracht ist, wobei es durch radiale Stirnflächen äußerer axialer Enden (36, 38) axial begrenzt ist, und welches mindestens zwei radial vorstehende Pole (40) aufweist;
- eine Erregerwicklung (48), welche um jeden Pol (40) gewickelt ist, derart, dass Abschnitte (56) von axialen Enden der Wicklung (48), Schaltenden genannt, axial bezüglich jeder radialen Stirnfläche eines äußeren axialen Endes (36, 38) des Blechpakets (32) vorstehen, wobei die äußere radiale Stirnfläche (58) jedes Schaltendes (56) bezüglich der zugeordneten radialen Stirnfläche eines äußeren axialen Endes (36, 38) des Blechpakets (32) axial nach außen versetzt ist;
- zwei Lagerschilde (60, 62) zum Halten des Blechpakets (32) aus wärmeleitendem Material, welche axial beiderseits des Blechpakets (32) angeordnet sind, derart, dass die inneren radialen Stirnflächen (66) der Lagerschilde (60, 62), die dem Blechpaket (32) zugewandt sind, an den radialen Stirnflächen äußerer axialer Enden (36, 38) des Blechpakets (32) anliegen, wobei Aufnahmen (78) in der inneren radialen Stirnfläche (66) jedes Lagerschilds (60, 62) ausgebildet sind, um die Schaltenden (56) aufzunehmen;
**dadurch gekennzeichnet, dass** mindestens eine der Aufnahmen (78) eine Kontaktfläche mit der äußeren radialen Stirnfläche (58) des zugeordneten Schaltendes (56) über einen wärmeleitenden und elektrisch isolierenden Stoff in der Form eines Tränklacks aufweist, und dadurch, dass die Aufnahme (78) einen Boden (80) aufweist, welcher das Schaltende (56) vollständig umhüllt.

2. Rotor (14) nach dem vorhergehenden Anspruch, **dadurch gekennzeichnet, dass** die gegenüberliegende Aufnahme (78), welche das Schaltende (56) derselben Wicklung (48) aufnimmt, einen Boden (80) aufweist, welcher das Schaltende (56) vollständig umhüllt.

3. Rotor (14) nach dem vorhergehenden Anspruch, **dadurch gekennzeichnet, dass** eines der Lagerschilde (60, 62) eine Einfüllöffnung (81) aufweist, welche in den Boden (80) einer Aufnahme (78) mündet, um das Einspritzen des flüssigen Lacks um die beiden Schaltenden (56) der Wicklung (48) herum zu ermöglichen.

4. Rotor (14) nach dem vorhergehenden Anspruch, **dadurch gekennzeichnet, dass** jede Aufnahme (78) derart mit Lack gefüllt ist, dass keine Luftblase in der Aufnahme (78) verbleibt.

5. Rotor nach einem der vorhergehenden Ansprüche, **dadurch gekennzeichnet, dass** jedes Lagerschild (60, 62) mehrere Aufnahmen (78) aufweist, die einen Boden (80) aufweisen, welcher ein Schaltende (56) vollständig umhüllt, und dadurch, dass die Aufnahmen gleichmäßig in Umfangsrichtung verteilt sind und sich in Umfangsrichtung abwechseln.

6. Rotor (14) nach einem der vorhergehenden Ansprüche, **dadurch gekennzeichnet, dass** die Lagerschilde (60, 62) aus wärmeleitendem, nicht magnetischem Material, wie etwa Aluminium, hergestellt sind.

7. Rotor (14) nach einem der vorhergehenden Ansprüche, **dadurch gekennzeichnet, dass** jedes Lagerschild (60, 62) Kühlungsmittel (82) aufweist, welche geeignet sind, die durch die Schaltenden (56) auf das Lagerschild (60, 62) übertragene Wärme abzuleiten.

8. Rotor (14) nach dem vorhergehenden Anspruch, **dadurch gekennzeichnet, dass** die Kühlungsmittel einen Lüfter aufweisen, der Rotorblätter (82) aufweist.

9. Rotor (14) nach dem vorhergehenden Anspruch, **dadurch gekennzeichnet, dass** die Rotorblätter (82) des Lüfters von einer äußeren radialen Fläche (72) des Lagerschilds (60, 62) getragen werden.

10. Rotor (14) nach dem vorhergehenden Anspruch, **dadurch gekennzeichnet, dass** die Rotorblätter (82) aus demselben Material wie das Lagerschild (60, 62) bestehen.

11. Rotor (14) nach dem vorhergehenden Anspruch, **dadurch gekennzeichnet, dass** die Rotorblätter (82) asymmetrisch um die Drehachse (B) des Rotors (14) verteilt sind.

12. Rotor (14) nach einem der vorhergehenden Ansprüche, **dadurch gekennzeichnet, dass** mindestens eines der Lagerschilde (60, 62) aus einem einzigen Stück aus nicht magnetischem Material, wie etwa Aluminium, hergestellt ist.

13. Rotor (14) nach dem vorhergehenden Anspruch, **dadurch gekennzeichnet, dass** die Aufnahmen (78) aus Hohlkehlen bestehen.

14. Rotor (14) nach einem der Ansprüche 1 bis 13, **dadurch gekennzeichnet, dass** mindestens eines der Lagerschilde (60, 62) aus mindestens einem ersten, inneren Teilstück, welches Aussparungen für die Hindurchbewegung der Schaltenden (56) aufweist, und einem zweiten, äußeren Teilstück, welches einen Boden (80) aufweist, um mit den Aussparungen des ersten Teilstücks die Aufnahmen (78) zu bilden, hergestellt ist.

15. Rotor (14) nach einem der vorhergehenden Ansprüche, **dadurch gekennzeichnet, dass** die Lagerschilde (60, 62) axial durch Zugstangen (68) axialer Ausrichtung miteinander verbunden sind.

16. Rotor (14) nach dem vorhergehenden Anspruch, **dadurch gekennzeichnet, dass** die Zugstangen (68) durch Verschraubung über eine Befestigungsgewindebohrung (70), welche in einem der Lagerschilde (62) ausgebildet ist, befestigt sind.

17. Rotor (14) nach einem der vorhergehenden Ansprüche, **dadurch gekennzeichnet, dass** wenigstens eines der Lagerschilde (60, 62) Auswuchtbohrungen aufweist.

18. Elektrische Drehmaschine (10), die einen Stator (18) aufweist, welcher einen Rotor (14) umgibt, der nach einem der vorhergehenden Ansprüche hergestellt ist.

## Claims

1. Rotor (14) for rotating electrical machine (10), notably an alternator or an alternator-starter for a motor vehicle, comprising:
- a rotor shaft (16) which is intended to be mounted to rotate about its axis (B);
- a bundle of plates (32), which is mounted coaxially on the rotor shaft (16) by being delimited axially by outer axial end radial faces (36, 38) and which comprises at least two radially projecting poles (40);
- an excitation winding (48) which is wound around each pole (40), so that axial end portions (56) of the winding (48), called lead-out wires, project axially relative to each outer axial end radial face (36, 38) of the bundle of plates (32), the outer radial face (58) of each lead-out wire (56) being axially offset outwards relative to the associated outer axial end radial face (36, 38) of the bundle of plates (32);
- two flanges (60, 62) securing the bundle of plates (32) made of heat-conducting material, which are arranged axially on either side of the bundle of plates (32) so that the inner radial faces (66) of the flanges (60, 62), oriented towards the bundle of plates (32), are bearing against the outer axial end radial faces (36, 38) of the bundle of plates (32), housings (78) being produced in the inner radial face (66) of each flange (60, 62) to receive the lead-out wires (56);
**characterized in that** at least one of the housings (78) comprises a contact surface with the outer radial face (58) of the associated lead-out wire (56) via a heat-conducting and electrically insulating substance in the form of an impregnating varnish and **in that** the housing (78) comprises a bottom (80) which completely jackets the lead-out wire (56).

2. Rotor (14) according to the preceding claim, **characterized in that** the opposite housing (78) which receives the lead-out wire (56) of one and the same winding (48) comprises a bottom (80) which completely jackets the lead-out wire (56).

3. Rotor (14) according to the preceding claim, **characterized in that** one of the flanges (60, 62) comprises a filling orifice (81) which opens into the bottom (80) of a housing (78) so as to allow for the injection of the liquid varnish around the two lead-out wires (56) of the winding (48).

4. Rotor (14) according to the preceding claim, **characterized in that** each housing (78) is filled with varnish so that no air bubble remains in the housing (78).

5. Rotor according to any one of the preceding claims, **characterized in that** each flange (60, 62) comprises a plurality of housings (78) comprising a bottom (80) completely jacketing a lead-out wire (56) and **in that** the housings are regularly distributed circumferentially and alternate circumferentially.

6. Rotor (14) according to any one of the preceding claims, **characterized in that** the flanges (60, 62) are made of a heat-conducting, non-magnetic material, such as aluminium.

7. Rotor (14) according to any one of the preceding claims, **characterized in that** each flange (60, 62) comprises cooling means (82) which are suitable for evacuating the heat transmitted to the flange (60, 62) by the lead-out wires (56).

8. Rotor (14) according to the preceding claim, **characterized in that** the cooling means comprise a fan with blades (82).

9. Rotor (14) according to the preceding claim, **characterized in that** the blades (82) of the fan are borne by an outer radial face (72) of the flange (60, 62).

10. Rotor (14) according to the preceding claim, **characterized in that** the blades (82) are made of the same material as the flange (60, 62).

11. Rotor (14) according to the preceding claim, **characterized in that** the blades (82) are distributed dissymmetrically around the axis of rotation (B) of the rotor (14).

12. Rotor (14) according to any one of the preceding claims, **characterized in that** at least one of the flanges (60, 62) is made from a single piece of non-magnetic material, such as aluminium.

13. Rotor (14) according to the preceding claim, **characterized in that** the housings (78) consist of hollows.

14. Rotor (14) according to any one of Claims 1 to 13, **characterized in that** at least one of the flanges (60, 62) is made of at least one first inner section which comprises voids for the passage of the lead-out wires (56) and one second outer section which comprises a bottom (80) for forming the housings (78) with the voids of the first section.

15. Rotor (14) according to any one of the preceding claims, **characterized in that** the flanges (60, 62) are linked axially to one another by axially oriented tie rods (68).

16. Rotor (14) according to the preceding claim, **characterized in that** the tie rods (68) are screw-fastened via a tapped fixing hole (70) which is produced in one of the flanges (62).

17. Rotor (14) according to any one of the preceding claims, **characterized in that** at least one of the flanges (60, 62) comprises rotation-balancing holes.

18. Rotating electrical machine (10) comprising a stator (18) surrounding a rotor (14) produced according to any one of the preceding claims.
